# EUROPEAN PATENT APPLICATION

(11) **EP 2 747 333 A1**
(43) Date of publication of application: **25.06.2014**
(21) Application number: 12198190.6
(22) Date of filing: 19.12.2012
(51) Int. Cl.: H04L 9/08, H04L 9/32, H04L 29/06

(54) **A secure storage system including a virtual safe device and a mobile secure storage device**

(71) Applicant: Nagravision S.A., 1033 Cheseaux-sur-Lausanne (CH)
(72) Inventor: Pelletier, Hervé, 1053 Cugy (CH)
(74) Representative: Leman Consulting S.A.

(57) **Abstract**

The present invention provides a virtual safe system wherein a mobile communications device transfers a private value onto a virtual safe device for secure storage using a proximity wireless communication channel and deletes the private value from its memory. The virtual safe encrypts the value under a secret key associated with the mobile device and sends the encrypted value back to the mobile device. The private value can be recovered by the same mobile communication device subsequently establishing a secure proximity wireless connection with the virtual safe, sending the encrypted private value to the virtual safe, which decrypts the value and returns it to the mobile device. This avoids the mobile device having to ever store the private value in clear or ever having to ever store the secret key.

## Description

### TECHNICAL DOMAIN

The present invention relates to the domain of controlled access to digital information, more particularly to the secure storage or backup of said information.

### STATE OF THE ART

Human memory, being fallible in nature, cannot be solely relied upon for remembering everything. This has been a fundamental observation which led people to find ways of more reliably recalling information. Nowadays people are increasingly required to remember such things as usernames, passwords, personal identification numbers (PIN), account numbers and so on. This can be described as private information and includes information which is preferably unique to that person and serves to positively identify him. Furthermore, it Is usually advantageous for such information to be kept secret, as its divulgation could either allow a third party to have access to that person's bank account or to otherwise pass himself off as that person or to have access to further personal information that the person prefers to keep secret.

Knowing the poor reliability of some people's memories, people have resorted to writing such private information down on pieces of paper. For extra security the paper is sometimes locked in a safe or in an otherwise secure place. More recently, instead of using paper, the private information is often stored on a computer in clear text format. By computer it is understood to include mobile devices such as personal digital assistants (PDA) and mobile telephones for example. For extra security the stored information is often encrypted using the classically available encryption systems but again a password or pass-phrase is generally required to decrypt the information, leading to a classic chicken and egg scenario of where to save the password/pass-phrase.

In spit of the drawbacks associated with saving the private information on a mobile device such as a mobile phone, there is still great advantage to be drawn from such a technique from the point of view of convenience since many people have their mobile phone with them most times. There does exist a drawback in that accidental loss of the mobile device results in loss of all of the private information. This drawback may be overcome by scrupulous attention to backing up of the mobile device onto a safe backup medium. There exists therefore a strong incentive to resort to this technique of storing private information on mobile devices.

As recognised by the Applicant of United States Patent Application Publication number 2009/0075630 A1, use of the technique mentioned above does nothing to protect the private data from the prying eyes of unscrupulous third parties intent on accessing the private data thus stored, especially when the third party find's a mobile device of a person who has lost it. The generally recognised solution to this, which would be to maintain the private information only in encrypted format until such times as the user requires access to it, is said to be time-consuming, impractical and too processor/memory intensive to be done on a mobile device. By way of a solution to this, the document discloses mechanisms that enable users to protect data stored on mobile handsets by remotely activating an encryption application that encrypts data and then deletes the encryption key from the mobile handset memory. The encrypted data may be sent to a server as a backup mechanism. An encryption key is either received from the server or generated by the mobile handset and communicated to the server. The server is configured to authenticate users. The server may be further configured to restore the data to the mobile handset by transmitting the files via a wireless network, such as the cellular telephone network. The mechanisms may be configured for regular, periodic execution of the encryption and backup thus described to be automatically performed on selected data files. The disadvantage of this system is that in order to be able to decrypt the encrypted files the user needs to reinstate the encryption key. In order to do this he must request it from the server and he has to authenticate himself to the server. This leads once again to the chicken and egg problem of the user having to remember a password for the authentication.

### BRIEF SUMMARY OF THE INVENTION

In order to overcome some of the disadvantages existing in the prior art for reliable protection of private information, the present invention provides for a mobile storage device and a virtual safe device which may work together at least temporarily to provide secure storage and retrieval of a private value. In the system according to an embodiment of the present invention, the mobile communications device is used to provide the private value to the virtual safe device and to store an encrypted version of the private value. Encryption is done by the virtual safe device, using a secret key corresponding to the mobile communications device, the encrypted private value being sent back to the mobile communications device. The private value may be restored when the mobile device sends the encrypted private value back to the virtual safe device. The virtual safe device then authorises the mobile device access to the decrypted private value. This authorisation may be achieved by the virtual safe device simply sending the decrypted private value back to the mobile device or sending the encrypted value and the secret key back to the mobile device, where the mobile device completes the decryption. The communications mentioned above may only take place when the two devices are within a predetermined distance from each other, this distance being sufficiently low to require that both the virtual safe, the mobile device and, by deduction, the user, are all simultaneously in the user's house for example. Preferably the communication channel between the two devices is a secured one.

According to a first aspect of the present invention, there is provided a mobile storage device for securely restoring a private value, the mobile storage device having a unique identifying parameter, the mobile storage device comprising:
a first wireless communication interface; and
a memory module for storing a secured version of the private value, said secured version of the private value being encrypted under a secret cryptographic key, the secret cryptographic key being associated with the mobile storage device;
   wherein the mobile storage device is configured to establish a local wireless communication channel between the first wireless communication interface and a pre-designated virtual safe device only whenever the mobile storage device is within a predetermined distance from the virtual safe device;
   the mobile storage device **characterised in that** it is further configured to:
receive, via the local wireless communication channel, the secured version of the private value; and
receive, via the local wireless communication channel, an authorisation to restore the private value.

According to another aspect of the present invention provision is made for a virtual safe device for providing secure access to a private value, the virtual safe device comprising:
a second wireless communication interface;
a key generation module to generate a secret cryptographic key corresponding to a particular secure storage device;
a cryptographic module for encrypting the personal value under the secret cryptographic key and for decrypting the thus secured version of the private value using the secret cryptographic key;
   wherein the virtual safe device is configured to establish a local wireless communication channel between the second wireless communication interface and the secure storage device only whenever the mobile storage device is within a predetermined distance from the virtual safe device;
   **characterised in that** the virtual safe device is further configured to:
receive, via the local wireless communication channel, the private value;
send, via the local wireless communication channel, the secured version of the private value to the mobile communications device; and
provide, to the secure storage device, via the local wireless communication channel, an authorisation to restore the private value.

According to a further aspect of the present invention a secure storage system for securely storing and retrieving a private value is provided, the secure storage system comprising a mobile storage device and a virtual safe device as described above.

According to yet another aspect of the present invention a method is provided for securely storing private value using the storage system described above, the method comprising:
establishing a local proximity wireless communication channel between the secure storage device and the virtual safe device only whenever the mobile storage device is within a predetermined distance from the virtual safe device;
sending the personal value from the mobile storage device to the virtual safe device via the thus established local proximity wireless communication channel;
encrypting the personal value under the secret cryptographic key in the virtual safe device; and
storing the secured version of the private value in the mobile storage device, the secured version of the private value being sent from the virtual safe device to the mobile storage device via the thus established local proximity wireless communication channel.

According to an even further aspect of the present invention, provision is made for a method for secure retrieval of a private value using the storage system described above, a secured version of the private value being stored in the mobile storage device, said secured version being the private value encrypted under a secret cryptographic key, the method comprising:
establishing a local proximity wireless communication channel between the secure storage device and the virtual safe device only whenever the mobile storage device is within a predetermined distance from the virtual safe device;
sending the secured version of the private value from the mobile storage device to the virtual safe device via the thus established local proximity wireless communication channel;
decrypting the personal value using the secret cryptographic key in the virtual safe device;
sending the private value from the virtual safe device to the mobile storage device via the local proximity wireless communication channel.

These and other aspects of the present invention will be described below.

### BRIEF DESCRIPTION OF THE DRAWINGS

The present invention will be better understood thanks to the detailed description which follows and the accompanying drawing, which is given as non-limiting examples of embodiments of the invention, wherein:
figure 1 shows a diagram of a system in which an embodiment of the present invention may be deployed.
figure 2 shows a diagram of a sequence of events occurring in a system in which an embodiment of the present invention may be deployed.

### DETAILED DESCRIPTION

The present invention takes advantage of the fact, among others, that sufficiently reliable authentication may be achieved in relatively simple ways depending on the environment and the circumstances under which the authentication is to take place.

It is a common desire for people to save certain private details or private values such that they are conveniently accessible yet secure. Such private values may take the form of a password, a pass-phrase, an account id and/or a password, credit card numbers etc. These values, if discovered by a malicious third party, present an opportunity for that third party to do some damage. The rewards perceived by that third party however are usually limited in the case of private values pertaining to a private individual, so for the same amount of work at trying to discover such information, the third party may decide to try to attempt to discover other information where the benefits may be multiplied. For example if the discovery of a secret key could lead to the third party being able to sell pirated copies of a piece of software or a film, then this could provide a high incentive to the third party. The private values discussed here however present little incentive for a malicious third party but still require to be sufficiently secured so as to dissuade the third party from trying to access the private values.

With this is mind, embodiments of the present invention are proposed where security is provided on a basis that, in general, a user of a system in which an embodiment of the present invention is deployed will generally be assured that only a limited number of people will have access to his home. Furthermore, under normal circumstances, only the user will have access to the user's personal mobile communications device. Here, communications device may be taken to be a personal digital assistant, a mobile telephone or any mobile device capable of performing wireless communication with a server. By server this can mean any wireless-enabled computing device such as a personal computer or, as in particular embodiments of the present invention, a set-top box or any media playing reception device, especially those being equipped with a smartcard or a security module or being other wise capable of performing cryptographic functions. Based on these two simultaneous conditions i.e. having access to a particular premises such as a particular home and having access to a particular mobile communication device such as a smart phone, a sufficient degree of security is established in that a particular reception device in the particular home will be able to authenticate a particular mobile device with a reasonable degree of confidence. According to an embodiment of the present invention, the wireless communication means between the reception device and the mobile communications device is further limited to be of a proximity type since it has a limited range. One example of a proximity type of wireless communications channel is one which is Bluetooth compliant. Any type of proximity communication means may be used. Advantageously, one which complies with the Near Field Communication Standard (NFC), when used in embodiments of the present invention, limit the possibilities for establishing a communication with the reception device by a mobile communication device to be only those which are within a few centimetres of the reception device. This provides a guarantee that the mobile communication device and its user really are in close proximity to each other for a connection to be established. Accordingly, wireless communication interfaces compliant with the WiFi standard provide a disadvantage in a system according to embodiments of the present invention in that the condition of the user being in close proximity, a requirement that is satisfied when the user is in his own home, is thereby less stringently enforced.

It can be seen then that given the above constraints, malicious third parties seeking to take advantage from private values secured according to an embodiment of the present invention, in order to achieve their goals, should demonstrate the unlikely simultaneous characteristics of having access to the user's home and being in possession of the user's mobile phone.

According to an embodiment of the present invention a system is provided, comprising a set-top box and at least one mobile phone. The set-top box is configured according to known Pay-TV systems and thereby comprises a security module or a smartcard and is configured to perform secure operations such as performing cryptographic functions and to securely store cryptographic keys and other secret values in a secure memory. Preferably the set-top box remains powered on at all times but is at least able to function when the user arrives home or shortly thereafter. The set-top box should remain powered on as long as the user wishes to use it in the manner described herein. The system may comprise more than one mobile phone, usually pertaining to different users as long as each mobile phone can be uniquely identified. A mobile phone configured to function according to embodiments of the present invention, require to be first registered by the system. As long as a registered mobile phone and its respective user is within a predetermined distance from the set-top box, then that user will be able to securely access any of his private values which have been stored in the system. By mobile phone, in the context of the present invention, it is meant to include any personal mobile communication device including mobile phones, PDAs, laptops, tablets etc. Such devices are usually only used by one person and are thereby personal or private. By set-top box it is meant to include any media content reception device capable of establishing a wireless communication channel as described herein.

The process for registering a mobile phone according to embodiments of the present invention is now described in part. As mentioned, the set-top box of the system described above comprises a smart card, preferably paired or otherwise associated with the set-top box. The smart-card is configured to perform asymmetric or symmetric cryptographic functions and as such is associated with a public key, the public key having public key elements (e,N). Part of the procedure for registering a mobile phone requires that the public key associated with the smart card be saved on the mobile phone. This need only be done once and may be performed for example via internet when the mobile phone further comprises an internet communication interface. According to one embodiment the user establishes a connection between the mobile phone and the set-top box (either wirelessly or via internet when the set-top box further comprises an internet connection) in order to receive the public key from the set-top box. According to another embodiment, the system further comprises a public key server and the user establishes a connection between the mobile phone and the public key server via internet. The user is thus able to store the public key on the mobile phone, thereby accomplishing the first part of registering the mobile phone. The second part will be described in a later part of the discussion.

As long as the mobile phone is close enough to the set-top box to be within the operating range of the communication interface of the system (a few centimetres for an NFC-compliant wireless communication interface) a secure wireless channel may be established between the mobile phone and the set-top box (smartcard). To render the wireless channel secure any of the known techniques may be used. For example, the mobile phone generates a random value x according to the Diffie-Hellman protocol and computes a secret s = g^x mod p, where p and g are group parameters (prime and generator, respectively) of the Diffie-Hellman protocol. Using the stored public key elements, the mobile phone calculates s^e mod N and sends it, via the wireless communication channel, to the smartcard in the set-top box. This prevents so-called "man-in-the-middle" attacks. The smartcard decrypts the value received from the mobile phone using its private key d and generates a second random value y. It then computes a channel key Kc by as Kc = g^(x*y) mod p. The smartcard sends g^y mod p back to the mobile phone and the mobile phone then also calculates Kc since now it can do Kc = g^(x*y) mod p. Kc now becomes a channel key with which the channel between the set-top box and the mobile phone can be secured. This key is used to encrypt/decrypt (using a symmetrical cryptographic algorithm) all further exchanges between the set-top box and the mobile phone. Thanks to this secure channel eavesdropping by third parties is prevented.

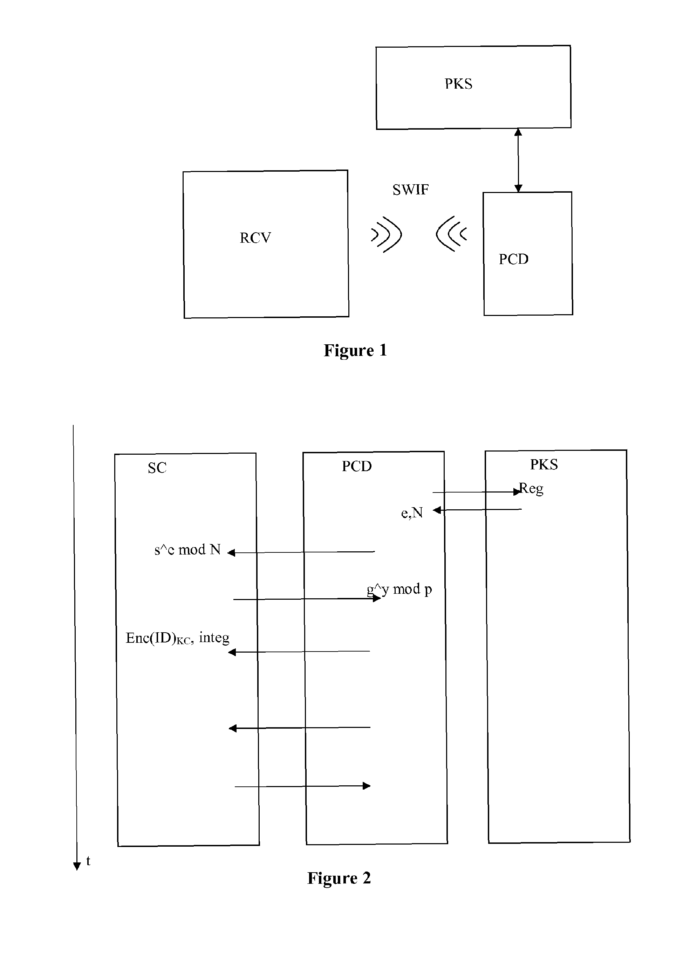

Figure 1 shows a schematic diagram of a system in which an embodiment of the present invention may be deployed. The system comprises at least one mobile communications device (PCD) having a unique identifying parameter (UID) and a set-top box (STB) having a smartcard (SC). In this embodiment the set-top box and the smartcard together will be known as a virtual safe (RCV). The mobile communications device (PCD) comprises a first wireless communication interface module (WIF1) and a memory module (MM1). The virtual safe device (RCV) comprises a second wireless interface module (WIF2) and a key generation module and further comprises a cryptographic module. The system is configured such that the virtual safe device (RCV) and the mobile communications device (PCD) are able to establish a wireless communication channel (SWIF) between them only if said two devices are within a predetermined distance (DMAX) from one another. Preferably such a channel complies with an NFC or Bluetooth Standard such that the communication channel (SWIF) can only become established when the two devices are a few centimetres from each other or several metres from each other, respectively. According to this embodiment the system further comprises a public key server (PKS) to provide the mobile communications device (PCD) with the public key of the virtual safe device (or the smartcard within). The mobile communication device and the public key server are configured to be able to communicate with each other, preferably via an internet connection but this could be any of the other known means.

According to another embodiment, the virtual safe device provides the public key to the mobile communications device. This may be done via a second communication channel. It is recognised that it is advantageous from a security point of view to resort to the services of a public key server however.

As previously mentioned, whenever the mobile communications device comes to within the predetermined distance of the virtual safe device, a wireless communication channel may be established between the two devices. If registration has not been completed and the mobile communications device is not already known to the virtual safe device, then the unique identifying parameter of the mobile communications device will not be known to the virtual safe device. To complete the second part of the registration then, a mobile communication device has to establish a connection with the virtual safe device and communicate its unique identifying parameter to the virtual safe device. For each unique identifying parameter of each mobile communications device in the system the virtual safe device generates an associated secret key (KSI). All of the associated secret keys are stored in a secure memory of the virtual safe device. This completes the second part of the registration.

A method for storing a private value according to various embodiments of the present invention includes sending the private value from the mobile device to the virtual safe device, preferably via a secure wireless channel; encrypting the private value on the virtual safe device using a secret key corresponding to the mobile device. The secret key is securely stored on the virtual safe device and need not be stored on the mobile device. The encrypted private value is sent back to the mobile device where it is stored. The private value is deleted from the mobile device and may preferably be deleted from the virtual safe device. The encrypted private value may also be deleted from the virtual safe device, however according to some embodiments it is kept on the virtual safe device as a backup.

Whenever the user wants to store a private value he approaches the virtual safe device with his mobile communication device until he reaches the predetermined range and thereby establishes a secure channel between the mobile device and the virtual safe. The mobile device sends its unique identifying parameter to the virtual safe, which authenticates it. The private value is sent from the mobile communications device via the secure channel to the virtual safe where it is encrypted under the secret key corresponding to the mobile communications device and sent back to the mobile communications device to be stored there in encrypted fashion. The private value is deleted from both the mobile communications device and the virtual safe device and therefore no longer exists anywhere in clear format.

A private value corresponding to a particular mobile communications device is therefore encrypted by the virtual safe and stored in encrypted format on the mobile device. A method for restoring the private value on the mobile device according to various embodiments of the present invention is now described. Restoration of the private value may occur when the mobile communications device finds itself within the required range (DMAX) of the virtual safe device. Whenever a mobile communications device comes within range of the virtual safe device and a wireless communications channel is established, the virtual safe device verifies the unique identifying parameter, received from the mobile communications device via the wireless communication channel, checks whether or not the mobile communications device is known and verifies its integrity. In order to restore the private value onto the mobile communications device, the mobile device sends the encrypted version of the private value back to the virtual safe device. The virtual safe device, having completed the integrity check, knows which mobile device is making the request for restore and uses the secret key corresponding to the mobile communications device to decrypt the private value and sends the decrypted private value back to the mobile communications device via the wireless communications channel. Optionally and advantageously, the wireless communications channel is secured as described above, thanks to the channel key.

In this manner the mobile communications device has restored a private value in a secure manner thanks to the secure channel and furthermore has done so without the secret key (KSI) ever having left the secure environment of the virtual safe device. This has been done in a convenient manner in that the user never has to remember any passwords in order to authenticate himself while requesting the private value to be restored. It was sufficient for the suitably registered mobile communications device to enter into a predetermined short range of the virtual communications device for the private value to be automatically transferred in a secure manner to the mobile communications device. According to another embodiment, the mobile device need not request access to the private value by sending the encrypted version of the private value back to the virtual safe, since this is done automatically whenever the communications device comes to within the predetermined range of the virtual safe. According to this embodiment, the virtual safe automatically decrypts all of the encrypted private values on the mobile device and sends them back decrypted. This embodiment may preferably be combined with another embodiment described later where the private values, once decrypted, are associated with a lifetime. In this manner, whenever the mobile device leaves the vicinity of the virtual safe then all of the private values in clear are erased from the mobile device.

According to different embodiments of the present invention, different ways of accessing the private value are possible. According to a first embodiment, as described above, whenever the mobile device and the safe are close enough to each other for the wireless channel to be established the private value is automatically made available to the mobile device. According to another embodiment, once the communication channel has been established, the mobile device first makes a request to the virtual safe before being granted access to the private value. The request includes the mobile device sending the encrypted version of the private value back to the virtual safe for the virtual safe to decrypt using the mobile device's secret key.

The terms "granted access" and "made available" as used above are both meant to cover the idea of the mobile device being authorised by the virtual safe to restore a clear copy of the encrypted private value into its memory. According to different embodiments this is done in different ways. According to one embodiment the authorisation is given simply by the virtual safe decrypting the private value and sending it via the secure channel to the mobile device which stores it in its memory. In another embodiment the virtual safe sends the secret key and the encrypted private value to the mobile device via the secure channel and the mobile device decrypts the private value.

Further security measures are undertaken according to another embodiment of the present invention, wherein automatic deletion of the private values from the mobile device's memory is performed whenever the mobile device leaves the predetermined range from the virtual safe. This ensures that the private value does not remain in the mobile device's memory once the user leaves his house for example.

According to another embodiment of the present invention, the private value, once restored in the mobile device, has a predetermined lifespan. The predetermined lifespan can be expressed in terms of a predetermined time. After the predetermined lifespan has elapsed the private value is deleted from the mobile device's memory. This embodiment can be combined with the one above, whereby even if the mobile device stays within the predetermined range, if the predetermined lifespan elapses, then the private value is still deleted. The embodiments in these two paragraphs (above) have variants wherein they are combined with the embodiment where the secret key is sent to the mobile device. The key may also have a lifespan and may also be erased when the mobile device leaves the predetermined vicinity of the virtual safe.

According to yet another embodiment, combinable with the embodiments of the two paragraphs above, the predetermined lifetime can be topped up. This prevents the private data being erased as long as the user is at home for example. According to this embodiment the predetermined lifetime is prolonged or otherwise extended as many times as necessary as long as the user's mobile device is close enough to the virtual safe device for a connection to be established. For example, if the user is authorised to access his private value a first time for a predetermined lifespan, moves away from the virtual safe for a time which falls within the predetermined lifespan (leaves home) before coming back to within the predetermined range of the virtual safe (arrives back home), then the private value remains on the mobile device. This allows for convenience of having access to less sensitive data even when the user leaves home. The user can decide which information is sensitive and which is not and configure the system to associate life-spans to different information so that sensitive information is quickly erased while less sensitive information remains for longer even when he leaves home.

Figure 2 shows processes which may be executed in a system in which an embodiment of the present invention is deployed. The processes are executed in sequence from top to bottom of the figure. Registration of the mobile device is initiated through obtention of the public key associated with the virtual safe device.

This can be done through the intermediary of a public key server. Registration is completed when the mobile device makes itself known to the virtual safe device by sending its unique identifier. This may also be accompanied by an integrity figure so that the virtual safe can check the integrity. The secret is generated by the mobile device, which generates a random number and calculates the secret s = g^x mod p. s^e mod N (using the public key from the key server) is then computed and sent by the mobile device. This is received by the virtual safe, which also generates a random y. The virtual safe decrypts (s^e mod N) ^ d mod N, where d is the virtual safe's RSA private key, and computes g^y mod p, which is then sent to the mobile device. Both the virtual safe and the mobile device compute the channel key as Kc=g^x.y mod p according to the Diffie-Hellman protocol. The mobile device encrypts its unique identity parameter and encrypts it and sends it to the virtual safe along with its integrity figure. The safe checks this and now knows with certainty which secret key belongs to the mobile device. Otherwise it generates a secret key for that mobile device. Mobile device initiates a request to access private data by sending the encrypted private data to the virtual safe. The virtual safe can either decrypt the private data using the mobile device's secret key or send the key back to the mobile device for decryption to be done there. The mobile device thus never has to store the decryption key or the private value in clear when it is away from the virtual safe device, thereby imparting the necessary security and convenience.

## Claims

1. A mobile storage device (PCD) for securely restoring a private value (PV), the mobile storage device (PCD) having a unique identifying parameter (UID), the mobile storage device (PCD) comprising:
a first wireless communication interface (WIF1); and
a memory module (MM1) for storing a secured version (PVSKI) of the private value (PV), said secured version (PVSKI) of the private value (PV) being encrypted under a secret cryptographic key (KSI), the secret cryptographic key
(KSI) being associated with the mobile storage device (PCD);
wherein the mobile storage device (PCD) is configured to establish a local wireless communication channel (SWIF) between the first wireless communication interface (WIF1) and a pre-designated virtual safe device (RCV) only whenever the mobile storage device (PCD) is within a predetermined distance (DMAX) from the virtual safe device (RCV);
the mobile storage device (PCD) **characterised in that** it is further configured to:
receive, via the local wireless communication channel (SWIF), the secured version (PVSKI) of the private value (PV); and
receive, via the local wireless communication channel (SWIF), an authorisation to restore the private value (PV).

2. The mobile storage device (PCD) according to claim 1, wherein it is further configured to provide the private value (PV) to the virtual safe device (RCV) prior to said restoration via the local wireless communication channel (SWIF) and is yet further configured not to maintain either a copy of the private value or the private value itself. (PV)

3. The mobile storage device (PCD) according to either of claims 1 or 2, wherein the mobile storage device (PCD) is further configured to trigger the virtual safe device (RCV) into providing for said reception of the authorisation to restore the private value (PV), said trigger being constituted either:
by a request to decrypt the secured version (PVSKI) of the private value (PV) being sent from the mobile storage device (PCD) to the virtual safe device (RCV), said request comprising the secured version (PVSKI) of the private value (PV); or
by said local wireless communication channel (SWIF) becoming established.

4. The mobile storage device (PCD) according to any of the preceding claims, wherein the mobile storage device (PCD) is further configured such that said authorisation to restore the private value (PV) is deemed to have been received when a temporary copy of the secret cryptographic key (KSI) is received from the virtual safe device (RCV), thereby allowing the mobile storage device (PCD) to decrypt the secured version (PVSKI) of the private value (PV) to restore the private value (PV), the temporary copy having a lifespan (L) after which the temporary copy becomes no longer available.

5. The mobile storage device (PCD) according to claim 4, wherein the lifespan (L) has a start time (ST) and an end time (SP), the start time (ST) being at earliest a time when the temporary copy of the secret cryptographic key (KSI) is received, the end time (SP) being at latest a time when the local wireless communication channel (SWIF) becomes no longer established.

6. The mobile storage device (PCD) according to claim 4, wherein the lifespan (L) is of a predetermined length of time (T), the predetermined length of time (T) being extendible by a predetermined extension amount (T+) whenever the local wireless communication channel (SWIF) becomes re-established within the lifespan (L).

7. The mobile storage device (PCD) according to any of claims 1 to 3, wherein the mobile storage device (PCD) is further configured such that said authorisation to restore the private value (PV) is deemed to have been received when a decrypted version (PV) of the secured version (PVSKI) of the personal value (PV) has been received by the mobile storage device (PCD) from the virtual safe-device, the mobile storage device (PCD) thus restoring the personal value (PV).

8. The mobile storage device (PCD) according to any of the preceding claims, wherein the local wireless communication channel (SWIF) is a secure channel.

9. The mobile storage device (PCD) according to any of the preceding claims, wherein the mobile storage device (PCD) is further configured to provide, via the local wireless communication channel (SWIF), the unique identifying parameter (UID) to the virtual safe device (RCV).

10. The mobile storage device (PCD) according to any of the preceding claims, wherein the mobile storage device (PCD) further comprises an integrity pattern (IP) to allow for authentication of the unique identifying parameter (UID) and is further configured to provide, via the local wireless communication channel (SWIF), the integrity pattern (IP) to the virtual safe device (RCV).

11. A virtual safe device (RCV) for providing secure access to a private value (PV), the virtual safe device (RCV) comprising:
a second wireless communication interface (WIF2);
a key generation module to generate a secret cryptographic key (KSI) corresponding to a particular secure storage device (PCD);
a cryptographic module for encrypting the personal value (PV) under the secret cryptographic key (KSI) and for decrypting the thus secured version
(PVSKI) of the private value (PV) using the secret cryptographic key (KSI);
wherein the virtual safe device (RCV) is configured to establish a local wireless communication channel (SWIF) between the second wireless communication interface (WIF1) and the secure storage device (PCD) only whenever the mobile storage device (PCD) is within a predetermined distance (DMAX) from the virtual safe device (RCV);
**characterised in that** the virtual safe device (RCV) is further configured to:
receive, via the local wireless communication channel (SWIF), the private value (PV);
send, via the local wireless communication channel (SWIF), the secured version (PVSKI) of the private value (PV) to the mobile communications device (PCD); and
provide, to the secure storage device (PCD), via the local wireless communication channel (SWIF), an authorisation to restore the private value (PV).

12. The virtual safe device (RCV) according to claim 11, the virtual safe device (RCV) further comprising a communicably connectable security module (SM) for performing any from said key generation, said encryption or said decryption.

13. A secure storage system (SS) for securely storing and retrieving a private value (PV), the secure storage system (SS) **characterised in that** it comprises:
a mobile storage device (PCD) according to claim 1; and
a virtual safe device (RCV) according to claim 11.

14. A method for securely storing private value (PV) using the storage system according to claim 13, the method comprising:
establishing a local proximity wireless communication channel (SWIF) between the secure storage device (PCD) and the virtual safe device (RCV) only whenever the mobile storage device (PCD) is within a predetermined distance (DMAX) from the virtual safe device (RCV);
sending the personal value (PV) from the mobile storage device (PCD) to the virtual safe device (RCV) via the thus established local proximity wireless communication channel (SWIF);
encrypting the personal value (PV) under the secret cryptographic key (KSI) in the virtual safe device (RCV); and
storing the secured version (PVSKI) of the private value (PV) in the mobile storage device (PCD), the secured version (PVSKI) of the private value (PV) being sent from the virtual safe device (RCV) to the mobile storage device (PCD) via the thus established local proximity wireless communication channel (SWIF).

15. A method for secure retrieval of a private value (PV) using the storage system according to claim 13, a secured version (PVSKI) of the private value (PV) being stored in the mobile storage device (RCV), said secured version (PVSKI) being the private value (PV) encrypted under a secret cryptographic key (KSI), the method comprising:
establishing a local proximity wireless communication channel (SWIF) between the secure storage device (PCD) and the virtual safe device (RCV) only whenever the mobile storage device (PCD) is within a predetermined distance (DMAX) from the virtual safe device (RCV);
sending the secured version (PVSKI) of the private value (PV) from the mobile storage device (PCD) to the virtual safe device (RCV) via the thus established local proximity wireless communication channel (SWIF);
decrypting the personal value (PV) using the secret cryptographic key (KSI) in the virtual safe device (RCV);
sending the private value (PV) from the virtual safe device (RCV) to the mobile storage device (PCD) via the local proximity wireless communication channel (SWIF).
